# EUROPEAN PATENT SPECIFICATION

(11) **EP 0 574 985 B1**
(45) Date of publication and mention of the grant of the patent: **13.12.1995**
(21) Application number: 93201641.3
(22) Date of filing: 09.06.1993
(51) Int. Cl.: B60B 37/06

(54) **Wheel and rotation shaft assembly for a hose-winding cart**
Rad und Drehwellevorrichtung für Schlauchwickelkarre
Roue et ensemble d'arbre de rotation pour chariot enrouleur de tuyau

(30) Priority: 15.06.1992 IT MI920606 U
(43) Date of publication of application: 22.12.1993
(73) Proprietor: CLABER S.P.A., I-33080 Fiume Veneto Pordenone (IT)
(72) Inventor: Spadotto, Oliviano, I-33170 Pordenone (IT)
(74) Representative: Mittler, Enrico

(56) References cited:
- EP-A- 0 336 802
- DE-A- 4 110 655
- DE-U- 8 804 621
- US-A- 5 046 520

## Description

The present invention relates to a wheel and rotation shaft assembly for a hose-winding cart.

It is wellknown that a hose-winding cart is a unit used for winding irrigation hoses. It usually comprises a supporting structure, or chassis, a drum for winding the hose and two wheels.

In known hose-winding carts the wheels are fastened to the rotation shaft, forming part of the supporting structure, by means of bolts, screws or other coupling means that are mounted after the wheel has been fitted on the rotation shaft itself.

Such a technique, however, has the drawback of making the assembly of the wheel and rotation shaft not immediate, a fairly unpleasant drawback especially in relation to the fact that hose-winding carts are frequently sold to the public not fully assembled.

It can also occur that a fastening element comes unstuck and is lost with consequent problems for the restoration of the cart's mobility.

DE-A-4110655 discloses a wheel and rotation shaft assembly in which a shaped end portion of the rotation shaft is engaged with a shaped internal wall of an axial hole of the wheel.

The object of the present invention is to accomplish a wheel and rotation shaft assembly for a hose-winding cart that provides a simplified and safe system for the assembly of its component parts.

According to the invention such object is attained by means of a wheel and rotation shaft assembly as defined in claim 1.

It appears evident that in this way an easy, fast and inexpensive assembly is obtained, that is also certainly exempt from possible detachments of the wheel during operations.

These and other features of the present invention shall be made more evident by the following detailed description of one of its embodiments illustrated as non-limiting examples in the enclosed drawings, wherein:
Fig. 1 represents a side view of the wheel from the inside of the cart;
Fig. 2 represents a side view of the wheel from the outside of the cart;
Fig. 3 represents a plan view from above of the wheel;
Fig. 4 represents a sectional view of the wheel taken along the line IV-IV of Fig. 2;
Fig. 5 represents a sectional view of the wheel mounted on a rotation shaft provided with a preassembled blocking device;
Fig. 6 represents a variant of the mounted sectional view shown in Fig. 5.

With reference to the drawings the present invention comprises a wheel 1, a rotation shaft 2 and a device 3 for blocking the wheel, made integral with the rotation shaft 2 through different techniques.

With reference to Fig.s 1, 2, 3 and 4 the wheel 1 has internal 5 and external 6 base surfaces different from one another; in fact the first of said surfaces 5 is hollow and divided into segments 7 by radial spokes 20, while the second one 6 is convex and structured to be completely filled.

The wheel 1 has a hole 8 passing through it in the central part, along its entire section, that is coaxial with the wheel 1 itself, that represents the space for receiving the rotation shaft 2.

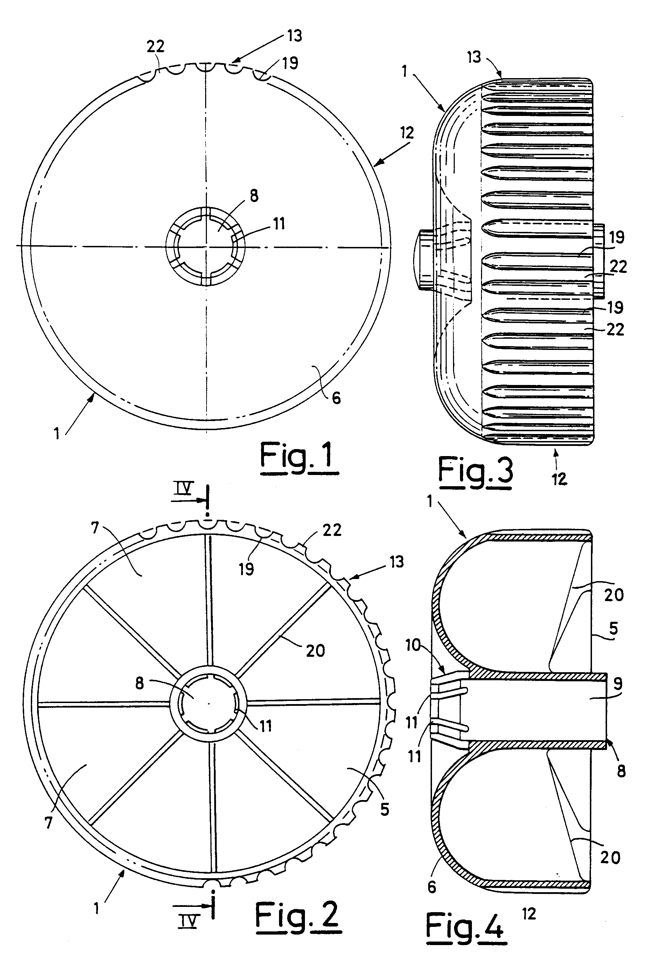

With reference to Fig. 4, said hole 8 comprises two main portions, indicated with 9 and 10. The first 9 of such portions represents the actual receiving space, while the second one 10 is arranged so as to lock the wheels on the rotation shaft 2. Said second portion 10, that protrudes from the external surface 6 of the wheel 1, comprises a circumferential succession of elastic laminas 11, whose slight inclination toward the inside of the hole 8 determines a reduction in the diameter of the hole itself in the part of said hole 8 where it protrudes from the external surface 6 of the wheel 1.

The rotation shaft 2, that forms part of the supporting structure (not shown in the figure) of the hose-winding cart and is arranged in the horizontal position, is constituted essentially by a hollow metal cylinder at whose extremities the wheels 1 are mounted.

The blocking device 3 can be structured in different ways, as made evident by the comparison between Fig.s 5 and 6 of the drawings. In any case, however, said blocking device 3, made of plastic material, is substantially divided into three portions, indicated with 14, 15 and 16.

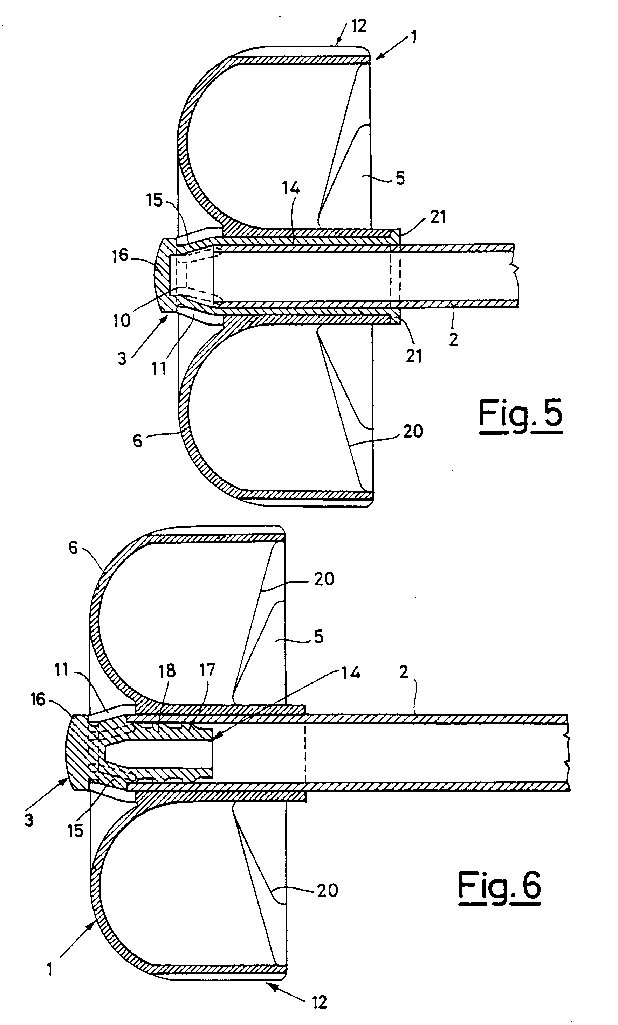

The first 14 of said portions has the function of making the blocking device 3 integral with the rotation shaft 2. With reference to Fig. 5, the portion 14 of the blocking device 3 can be structured so as to define a cylindrical cavity whose internal diameter is equal to the external diameter of the rotation shaft 2, so as to allow the forced fit of said shaft 2 in said cavity. A terminal flange 21 acts as positioning shoulder and abutment for the mounted wheel.

As an alternative, with reference to Fig. 6, said first portion 14 of the blocking device 3 can be constituted by a casing having a cylindrical shape 18, whose external diameter is smaller than the internal one of the rotation shaft 2, provided with protrusions 17 on the lateral surface. Said protrusions 17, determining an increase of the diameter actually occupied by the portion 14 of the blocking device 3, allow a perfect fit of said blocking device 3 in the rotation shaft 2, thus making said components integral.

With reference to Fig.s 5 and 6, the second portion 15 of the abovementioned blocking device 3 is constituted, for each of the mentioned variants, by a hollow frustum-shaped structure, integral with the portion 14 described above, whose larger base is coincident with the base of the hollow cylinder constituting the abovementioned portion 14 as regards the first variant (Fig. 5), and with the base of the cylinder constituting the rotation shaft 2 as regards the second variant (Fig. 6).

The third and last portion 16 of the blocking device 3, which is also integral with the two portions 14 and 15 already described, is constituted by a circular-shaped head, coaxial with the abovementioned portions 14 and 15 and with a diameter equal to the external diameter of the portion 14, as regards the first variant (Fig. 5), and to the external diameter of the rotation shaft 2 as regards the second variant (Fig. 6).

Going back to Fig.s 1, 2, 3 and 4, the lateral surface 12 of the wheel 1 has a tread 13, constituted by a circumferential succession of protrusions 22 and recesses 19, obtained in a single piece on the lateral surface 12 itself.

As an alternative the tread 13 can be obtained by means of a layer of a special plastic material (modified polyolefines), applied in an irremovable manner by injection on the lateral surface 12 of the wheel 1, with which it remains integral.

With reference to the enclosed drawings, the wheel and rotation shaft assembly is put together in two successive steps; first the blocking device 3 is fixed to the rotation shaft 2, so as to be integral with the latter (Fig.s 5 and 6). The second step consists on the other hand in mounting the wheel 1 on the rotation shaft 2 and is carried out by inserting the terminal part of said rotation shaft 2, comprising the blocking device 3, inside the hole 8 of the wheel 1. The elastic laminas 11 that cover the external terminal part of said hole 8 allow the passage of the head 16 of said blocking device 3 in one direction only and thus allow, once the head has passed, the complete and final blocking of the wheel 1 on the rotation shaft 2.

## Claims

1. Wheel and rotation shaft assembly comprising a rotation shaft (2) and a wheel (1) having an axial hole (8) passing therethrough to receive the rotation shaft (2), characterized in that an end portion of the axial hole (8) of the wheel (1) is provided with a circumferential series of axially extending elastic laminas (11) which converge towards the longitudinal axis of the hole (8) and a blocking device (3) is provided which is a distinct piece fixed to an end portion of the rotation shaft (2) prior to receiption of the shaft (2) by the wheel (1) and has a terminal head (16) which passes through said axial hole (8) and said series of elastic laminas (11) of the wheel (1) to position beyond said elastic laminas (11) and in axial engagement therewith after reception of the rotation shaft (2) and the blocking device (3) by the wheel (1).

2. Assembly according to claim 1, characterized in that the blocking device (3) comprises a first portion (14) constituted by a hollow cylinder fitted over the rotation shaft (2) and provided with a terminal flange (21) that acts as positioning shoulder and abutment for the mounted wheel (1), a second portion (15) constituted by a hollow frustum-shaped structure, whose larger base coincides with the base of the hollow cylinder constituting the abovementioned first portion (14) of the blocking device (3), and a third portion (16) constituted by a circular-shaped head, coaxial with the abovementioned portions (14 and 15) and integral with the same, whose diameter is equal to the external diameter of the first portion (14) of the device (3).

3. Assembly according to claim 1, characterized in that the blocking device (3) comprises a first portion (14) constituted by a casing having a cylindrical shape (18), whose external diameter is smaller than the internal one of the rotation shaft (2) and is provided with protrusions (17) on the lateral surface, for fastening said blocking device (3) to said rotation shaft (2), a second portion (15), integral with said first portion (14), constituted by a hollow frustum-shaped structure whose larger base coincides with the base of the cylinder constituting the rotation shaft (2), a third and last portion (16) constituted by a circular-shaped head, coaxial with the abovementioned portions (14 and 15), and integral with the same, whose diameter is equal to the external diameter of the rotation shaft (2).

4. Assembly according to claim 1, characterized in that the wheel (1) has the internal base surface (5) divided into segments (7) by radial spokes (20) and the external base surface (6) convex and structured to be completely filled.

5. Assembly according to claim 1, characterized in that the wheel (1) has a lateral surface (12) with a tread (13), constituted by a circumferential succession of protrusions (22) and recesses (19), obtained in a single piece on the lateral surface (12) of the wheel (1).

6. Assembly according to claim 1, characterized in that the wheel (1) has a lateral surface (12) with a tread (13) obtained by means of a layer of plastic material injected in an irremovable manner on the lateral surface (12) of the wheel (1).

7. Assembly according to claim 6, characterized in that said plastic material is constituted by modified polyolefines.

## Patentansprüche

1. Rad- und Wellenanordnung, enthaltend eine Welle (2) und ein Rad (1) mit einer hindurchgehenden axialen Bohrung (8) zur Aufnahme der Welle,
dadurch **gekennzeichnet**,
daß ein Endabschnitt der axialen Bohrung (8) des Rads (1) mit einer Umfangsreihe von axialen elastischen Lamellen (11) versehen ist, die zur Längsachse der Bohrung (8) konvergieren, und eine Verriegelungsvorrichtung (3) vorgesehen ist, die ein gesondertes Teil ist, das vor Aufnahme der Welle (2) durch das Rad (1) an einem Endabschnitt der Welle (2) befestigt wird, und die einen Endkopf (16) hat, der nach Aufnahme der Welle (2) und der Verriegelungsvorrichtung (3) durch das Rad (1) durch die axiale Bohrung (8) und die Reihe von elastischen Lamellen (11) des Rads (1) bis in eine Stellung jenseits der elastischen Lamellen (11) hindurchtritt und in axialem Eingriff hiermit steht.

2. Anordnung nach Anspruch 1, dadurch gekennzeichnet, daß die Verriegelungsvorrichtung (3) folgendes enthält: einen ersten Teil (14), gebildet durch einen auf die Welle (2) aufgepreßten Hohlzylinder mit einem Endflansch (21), der als Positionierschulter und Anschlag für das montierte Rad (1) dient, einen zweiten Teil (15), gebildet durch ein hohles kegelstumpfförmiges Gebilde, dessen größere Basis mit der Basis des Hohlzylinders zusammenfällt, der den oben genannten ersten Teil (14) der Verriegelungsvorrichtung (3) bildet, und einen dritten Teil (16), gebildet durch einen kreisförmigen Kopf, der zu den oben genannten Teilen (14 und 15) koaxial und mit denselben einstückig ausgebildet ist und dessen Durchmesser gleich dem Außendurchmesser des ersten Teils (14) der Vorrichtung (3) ist.

3. Anordnung nach Anspruch 1, dadurch gekennzeichnet, daß die Verriegelungsvorrichtung (3) folgendes enthält: einen ersten Teil (14), gebildet durch ein zylindrisches Gehäuse (18), dessen Außendurchmesser kleiner als der Innendurchmesser der Welle (2) ist und das auf der Seitenfläche mit Vorsprüngen (17) versehen ist zur Befestigung der Verriegelungsvorrichtung (3) an der Welle (2), einen zweiten Teil (15), der mit dem ersten Teil (14) einstückig ausgebildet ist, gebildet durch ein hohles kegelstumpfförmiges Gebilde, dessen größere Basis mit der Basis des die Welle (2) bildenden Zylinders zusammenfällt, einen dritten und letzten Teil (16), gebildet durch einen kreisförmigen Kopf, der zu den oben genannten Teilen (14 und 15) koaxial und einstückig hiermit ausgebildet ist und dessen Durchmesser gleich dem Außendurchmesser der Welle (2) ist.

4. Anordnung nach Anspruch 1, dadurch gekennzeichnet, daß die innere Grundfläche (5) des Rads (1) durch radiale Speichen (20) in Segmente unterteilt ist und die äußere Grundfläche (6) des Rads koaxial und zur vollständigen Füllung ausgebildet ist.

5. Anordnung nach Anspruch 1, dadurch gekennzeichnet, daß das Rad (1) eine Seitenfläche (12) mit einer Lauffläche (13) hat, die durch eine Umfangsfolge von Vorsprüngen (22) und Ausnehmungen (19) gebildet und als einzelnes Teil auf der Seitenfläche (12) des Rads hergestellt ist.

6. Anordnung nach Anspruch 1, dadurch gekennzeichnet, daß das Rad (1) eine Seitenfläche (12) mit einer Lauffläche (13) hat, die durch eine Schicht aus Kunststoff hergestellt ist, die auf die Seitenfläche (12) des Rads (1) unlösbar aufgespritzt ist.

7. Anordnung nach Anspruch 6, dadurch gekennzeichnet, daß der Kunststoff durch modifizierte Polyolefine gebildet ist.

## Revendications

1. Ensemble roue et arbre de rotation comprenant un arbre de rotation (2) et une roue (1) ayant un trou axial traversant (8) pour recevoir l'arbre de rotation (2), caractérisé en ce gu'une partie extrême du trou axial (8) de la roue (1) est munie d'une série circonférentielle de lamelles élastiques (11) s'étendant axialement, qui convergent vers l'axe longitudinal du trou (8), et il est prévu un dispositif de blocage (3) qui est une pièce distincte fixée à une partie d'extrémité de l'arbre de rotation (2) avant que l'arbre (2) ne soit reçu par la roue (1) et qui possède une tête terminale (16) qui passe a travers ledit trou axial (8) et à travers ladite série de lamelles élastiques (11) de la roue (1) pour se positionner au-delà desdites lamelles élastiques (11) et en prise axiale avec elles lorsque l'arbre de rotation (2) et le dispositif de blocage (3) ont été reçues par la roue (1).

2. Ensemble selon la revendication 1, caractérisé en ce que le dispositif de blocage (3) comprend une première partie (14) constituée par un cylindre creux monté sur l'arbre de rotation (2) et munie d'une collerette terminale (21) qui joue le rôle d'un épaulement de positionnement et de butée pour la roue (1) montée, une deuxième partie (15) constituée par une structure creuse tronconique, dont la grande base coïncide avec la base du cylindre creux constituant la première partie précitée (14) du dispositif de blocage (3), et une troisième partie (16) constituée par une tête de forme circulaire, coaxiale aux parties (14 et 15) précitées et d'une seule pièce avec celles-ci, dont le diamètre est égal au diamètre extérieur de la première partie (14) du dispositif (3).

3. Ensemble selon la revendication 1, caractérisé en ce que le dispositif de blocage (3) comprend une première partie (14) constituée par un boîtier ayant une forme cylindrique (18) dont le diamètre extérieur est plus petit que le diamètre intérieur de l'arbre de rotation (2) et est muni de saillies (17) sur la surface latérale, pour fixer ledit dispositif de blocage (3) audit arbre de rotation (2), une deuxième partie (15) d'une seule pièce avec ladite première partie (14), et constituée par une structure tronconique creuse dont la grande base coïncide avec la base du cylindre constituant l'arbre de rotation (2), une troisième et dernière partie (16) constituée par une tête de forme circulaire, coaxiale aux parties (14 et 15) précitées, et d'une seule pièce avec celles-ci, dont le diamètre est égal au diamètre extérieur de l'arbre de rotation (2).

4. Ensemble selon la revendication 1, caractérisé en ce que la roue (1) a sa surface de base intérieure (5) divisée en segments (7) par des rayons radiaux (20) et sa surface de base extérieure (6) convexe et structurée pour être entièrement remplie.

5. Ensemble selon la revendication 1, caractérisé en ce que la roue (1) a une surface latérale (12) munie d'un portant (13), constitué par une succession circonférentielle de saillies (22) et de creux (19) obtenus en une seule pièce sur la surface latérale (12) de la roue (1).

6. Ensemble selon la revendication 1, caractérisé en ce que la roue (1) a une surface latérale (12) munie d'un portant (13) obtenu au moyen d'une couche de matière plastique injectée de façon inamovible sur la surface latérale (12) de la roue (1).

7. Ensemble selon la revendication 6, caractérisé en ce que ladite matière plastique est constituée par des polyoléfines modifiées.
